Europäisches Patentamt

(19) European Patent Office  (11) Numéro de publication: **0 134 790**

Office européen des brevets  **B1**

## (12) FASCICULE DE BREVET EUROPÉEN

(45) Date de publication du fascicule du brevet:
**04.11.87**

(21) Numéro de dépôt: **84900374.4**

(22) Date de dépôt: **13.01.84**

(86) Numéro de dépôt international:
**PCT/BE 84/00001**

(87) Numéro de publication internationale:
**WO 84/02860 (02.08.84 Gazette 84/18)**

(51) Int. Cl.⁴: **B 21 B 37/00,** B 21 B 45/04, B 21 D 11/16, B 21 D 11/12

(54) **PERFECTIONNEMENTS AUX PROCEDES DE CONDITIONNEMENT DES PRODUITS METALLIQUES.**

(30) Priorité: **20.01.83 BE 6047767**

(43) Date de publication de la demande:
**27.03.85 Bulletin 85/13**

(45) Mention de la délivrance du brevet:
**04.11.87 Bulletin 87/45**

(84) Etats contractants désignés:
**DE FR GB LU NL**

(56) Documents cité:
**EP-A-0 030 976**
**EP-A-0 053 274**
**DE-B-1 033 168**
**LU-A-69 006**

**Iron Steel Engineer, vol 55 n. 5, May 1978, G.N. Villee : "The modern way - Automatic inspection and conditioning of billets and blooms", see pages 44 to 48**

(73) Titulaire: **CENTRE DE RECHERCHES METALLURGIQUES CENTRUM VOOR RESEARCH IN DE METALLURGIE Association sans but lucratif, Vereniging zonder winstoogmerk Rue Montoyer, 47, B-1040 Bruxelles (BE)**

(72) Inventeur: **PIRLET, Robert, 32, Avenue des Lauriers, B-4920 Embourg (BE)**

(74) Mandataire: **Lacasse, Lucien Emile, CENTRE DE RECHERCHES METALLURGIQUES Abbaye du Val- Benoît 11, rue Ernest Solvay, B-4000 Liège (BE)**

LIBER, STOCKHOLM 1987

## Description

La présente invention concerne un procédé perfectionné de conduite de l'opération de conditionnement de produits métalliques. Il s'applique en particulier au conditionnement à chaud de produits obtenus par laminage ou par coulée continue, tels que des brames en acier.

On sait que sous le vocable de "conditionnement" des produits métalliques, sont généralement regroupées diverses opérations comportant usuellement l'examen des produits pour en détecter les défauts, l'élimination des défauts détectés, le contrôle de cette élimination et le nettoyage final éventuel du produit.

Le conditionnement visé par la présente invention concerne les défauts superficiels et les défauts sous-cutanés, c'est-à-dire les défauts situés à une profondeur n'excédant pas 10 mm à partir de la surface du produit.

Dans la description qui suit, il est fait référence plus particulièrement à des brames d'acier obtenues par coulée continue. Il va de soi cependant que cette description n'a aucun caractère limitatif et que la méthode de l'invention peut également s'appliquer à de nombreux autres produits métalliques.

Les fabricants d'acier ont toujours cherché à réaliser des produits présentant un nombre de défauts aussi faible que possible, afin de ne pas compromettre la qualité des produits finis. A l'heure actuelle, il n'est cependant pas encore possible de produire des brames absolument exemptes de défauts. Il est dès lors nécessaire de détecter et d'éliminer les défauts susceptibles de nuire à la qualité des produits finis.

Les méthodes de conditionnement pratiquées actuellement sont pour la plupart empiriques et leur efficacité dépend largement de l'habileté et de l'expérience de l'opérateur.

On connaît en particulier une méthode selon laquelle on écrique une zone, au moyen d'un chalumeau, le long de l'axe longitudinal de la face supérieure de la brame, après refroidissement de celle-ci. La zone écriquée présente généralement une profondeur ne dépassant pas 5 mm et une largeur de 50 à 60 mm. Lorsque la flamme du chalumeau rencontre un défaut, elle subit une brève modification de forme et d'intensité lumineuse, que l'opérateur doit interpréter pour apprécier la nature et la gravité du défaut.

Dans le cas de certains aciers de qualité supérieure, on procède quelquefois à l'écriquage de deux zones supplémentaires au voisinage des bords longitudinaux de la brame, parallèlement à la zone écriquée axiale.

Dans tous les cas, la qualité de la surface tout entière est alors appréciée par extrapolation des résultats fournis par la ou les zones qui sont écriquées dans la face supérieure de la brame.

Cette méthode est très lente et son caractère empirique ne permet pas d'obtenir des résultats objectifs et reproductibles. En outre, elle ne concerne effectivement qu'une faible partie de la surface du produit et elle ne donne dès lors aucune information réelle et fiable couvrant la totalité de la surface.

On connaît également un appareil d'écriquage par points, utilisable en particulier lorsqu'il s'agit d'éliminer de gros défauts. Un châssis portant un certain nombre de chalumeaux se déplace automatiquement devant la brame à traiter et les chalumeaux nettoient la surface aux endroits dont les coordonnées ont été communiquées à l'organe de commande de l'appareil.

L'utilisation de ces appareils implique cependant que l'on ait au préalable localisé les défauts à éliminer. En outre, ils ne permettent pas d'inspecter la zone traitée et l'opération de nettoyage risque donc de se dérouler de façon aveugle.

Une méthode plus récente et applicable à des produits se trouvant à une température de 800° C à 1000° C, consiste à écriquer une zone, comme rappelé plus haut, et à reporter l'image de la flamme du chalumeau à une certaine distance du produit, à l'aide d'une caméra et d'un écran de télévision. L'opérateur peut ainsi observer l'image de la flamme sans être exposé à la forte chaleur dégagée par le produit à haute température; il relève les coordonnées, c'est-à-dire essentiellement la position dans cette zone des défauts relevés par les variations de forme et de luminosité de la flamme. Le produit chaud est ensuite envoyé au chantier de conditionnement, où un chalumeau automatique élimine les défauts aux points dont les coordonnées ont été communiquées à son organe de commande.

Cette méthode présente les inconvénients inhérents à la méthode d'écriquage rappelée plus haut, à savoir lenteur, empirisme, absence de fiabilité et de reproductibilité des observations, exiguîté de la partie de surface observée. En outre, elle entraîne la séparation des opérations de détection et d'élimination des défauts; par conséquent, elle exige une surface de sol plus importante et une durée d'opération accrue, qui se répercutent défavorablement sur le coût de l'opération.

Par ailleurs, les méthodes de conditionnement actuelles sont, par essence, discontinues car elles nécessitent dans la plupart des cas, le transfert du produit dans un atelier approprié, appelé atelier de conditionnement, distinct de la halle de coulée.

Ce caractère discontinu constitue un inconvénient d'autant plus sérieux qu'une proportion croissante de l'acier produit est coulé en continu.

La demande de brevet EP-A-0 053 274 décrit un procédé pour l'enlèvement mécanique continu de matière à la surface d'un produit de coulée continue chaud, avec intensification du traitement à l'endroit des défauts de surface détectés.

Les inconvénients de ce procédé sont que le détecteur de défauts est fixe, et que le dispositif d'élimination des défauts suit une trajectoire prédéterminée.

On connaît également, par la demande de brevet EP-A-0 030 976, un procédé de détection et d'élimination des défauts de surface d'un produit laminé chaud. Dans ce cas, la tête de détection des défauts, l'unité de marquage et l'unité d'écriquage sont fixes l'une par rapport à l'autre et décrivent ensemble une même trajectoire longitudinale par rapport au produit qui défile. Une unité de commande envoie simplement un signal, avec un retard approprié, aux unités de marquage et d'écriquage lorsque la tête de détection a détecté un défaut.

La présente invention a pour objet un procédé permettant de remédier aux divers inconvénients qui viennent d'être indiqués.

L'invention propose en fait une nouvelle méthode de positionnement direct des moyens de traitement, à savoir d'élimination, de contrôle et de nettoyage évoqués plus haut, à l'endroit des défauts détectés, sans que ces moyens soient assujettis à suivre une trajectoire prédéterminée.

Le procédé qui fait l'objet de la présente invention permet ainsi de regrouper en un seul endroit les différentes opérations de détection des défauts, d'élimination de ces défauts et de contrôle de la surface que comprend le conditionnement d'un produit métallique, tel qu'une brame en acier coulée en continu.

Un autre but de l'invention est de fournir une méthode de conditionnement qui soit applicable à des produits métalliques en mouvement, par exemple aussi près que possible de la sortie de l'installation de formation de ce produit.

A cet effet, l'invention porte sur un procédé de conduite de l'opération de conditionnement d'un produit métallique chaud en mouvement à la sortie d'une installation de coulée continue, dans lequel on détecte les défauts superficiels et/ou sous-cutanés présents dans une face dudit produit au moyen d'un appareil de détection disposé devant ladite face et dans lequel on élimine lesdits défauts au moyen d'un dispositif d'élimination des défauts, caractérisé en ce que l'on déplace, au moyen d'un système automatique, ledit appareil de détection devant ladite face du produit, en ce que l'on relève les données traduisant la localisation et/ou la gravité des défauts détectés dans ladite face, en ce que l'on introduit ces données dans un calculateur, en ce que l'on commande à l'aide dudit calculateur et à partir desdites données:

(a) au moins un premier système automatique assurant le positionnement dudit dispositif d'élimination des défauts à l'endroit d'un défaut détecté et l'intervention dudit dispositif audit endroit;

(b) au moins un deuxième système automatique équipé d'un moyen de contrôle de l'élimination dudit défaut;

(c) au moins un troisième système automatique équipé d'au moins un moyen de nettoyage de ladite face du produit;

et en ce que l'on utilise, pour au moins un desdits systèmes automatiques, un robot ou un automate programmable.

Selon une modalité intéressante de mise en oeuvre, on répète automatiquement l'opération d'élimination d'un défaut, lorsque le contrôle subséquent révèle que le défaut n'avait pas été éliminé entièrement lors de la première opération.

Si le défaut est encore visible à une profondeur d'environ 5 mm, l'opération d'élimination du défaut est interrompue et le tronçon défectueux du produit est déclassé.

Selon l'invention, il est particulièrement intéressant d'appliquer le procédé en ligne, sur un produit métallique en mouvement.

Selon une variante intéressante du procédé de l'invention, on déplace la flamme d'un chalumeau le long de la surface à conditionner, on analyse l'image de ladite flamme par un moyen connu en soi pour détecter les variations de ses caractéristiques dues à la présence de défauts, on relève, de l'analyse des images, les données traduisant le degré de gravité, ainsi que la localisation desdits défauts, on transmet ces données à un calculateur et on commande, au moyen dudit calculateur et à partir desdites données, l'intervention des systèmes automatiques décrits plus haut et assurant l'élimination des défauts, ainsi que le contrôle et le nettoyage de la surface du produit.

A cet égard, il a été trouvé particulièrement intéressant d'analyser lesdites images en détectant les variations d'intensité lumineuse de la flamme par rapport à un niveau de référence correspondant à l'absence de défauts.

Il s'est en particulier avéré intéressant, dans cette variante, d'utiliser, pour l'élimination des défauts, le chalumeau servant à la détection de ces défauts. Dans ce cas, on interrompt le déplacement dudit chalumeau aux points où l'analyse d'image fait apparaître, entre l'image instantanée et l'image de référence, un écart supérieur à une valeur prédéterminée, l'interruption se prolongeant aussi longtemps que ledit écart reste supérieur à ladite valeur prédéterminée.

De façon préférentielle, on pratique la détection des défauts du produit en effectuant des passes successives, de préférence transversales, notamment en un mouvement de va-et-vient par rapport à sa surface.

Selon l'invention, on peut pratiquer la détection des défauts soit en scrutant l'intégralité de la surface à conditionner, soit en ne scrutant qu'une partie de cette surface et en extrapolant les résultats de cette scrutation partielle à l'ensemble de la surface à conditionner au moyen d'un algorithme tiré de la pratique industrielle.

Selon l'invention, il s'est avéré intéressant de détecter et d'éliminer les défauts sur au moins deux faces dudit produit, ces opérations pouvant se dérouler simultanément ou non sur les diverses faces du produit.

En ce qui concerne les opérations de détection et d'élimination des défauts, ainsi que de contrôle et de nettoyage de la surface du produit, la présente invention fait appel à des moyens counus.

A titre d'exemple, on peut utiliser:
- un système électro-optique, tel qu'une caméra de télévision pour détecter les défauts superficiels,
- un appareil à courants de Foucault pour détecter les défauts sous-cutanés;
- une meuleuse ou un chalumeau à flamme pour éliminer les défauts;
- une caméra de télévision avec moniteur pour contrôler la surface;
- un racloir pour le nettoyage de la surface.

Le procédé de l'invention permet d'inspecter et de conditionner l'intégralité d'une ou de plusieurs faces du produit métallique. Il n'est donc pas sujet à l'important risque d'erreur que présentent les procédés usuels par extrapolation à partir d'un contrôle localisé.

En outre, il est basé sur la détection objective, et de préférence automatique, et dès lors reproductible, de la localisation et de la gravité des défauts. Son efficacité ne dépend donc plus de l'habileté ou de l'expérience de l'opérateur.

Enfin, il peut être mis en oeuvre en continu, simultanément ou non sur une ou plusieurs faces du produit métallique. Il permet donc d'éviter de nombreuses manipulations, il n'exige pas d'atelier spécial de conditionnement et réduit très sensiblement le temps nécessaire à ces opérations.

Dans le cas particulier de brames de coulée continue, Le procédé de l'invention peut être mis en oeuvre dès la sortie de la machine de coulée, ce qui permet d'obtenir très rapidement des informations fiables sur la qualité de la brame. En particulier, il permet de déterminer les tronçons de brame qui devront être déclassés ou mis au rebut lors de l'oxycoupage.

**Revendications**

1. Procédé de conduite de l'opération de conditionnement d'un produit métallique chaud en mouvement à la sortie d'une installation de coulée continue, dans lequel on détecte les défauts superficiels et/ou sous-cutanés présents dans une face dudit produit au moyen d'un appareil de détection disposé devant ladite face et dans lequel on élimine lesdits défauts au moyen d'un dispositif d' élimination des défauts, caractérisé en ce que l'on déplace, au moyen d'un système automatique, ledit appareil de détection devant ladite face du produit, en ce que l'on relève les données traduisant la localisation et/ou la gravité des défauts détectés dans ladite face, en ce que l'on introduit ces données dans un calculateur, en ce que l'on commande à l'aide dudit calculateur et à partir desdites données:
(a) au moins un premier système automatique assurant le positionnement dudit dispositif d'élimination des défauts à l'endroit d'un défaut détecté et l'intervention dudit dispositif audit endroit;
(b) au moins un deuxième système automatique équipé d'un moyen de contrôle de l'élimination dudit défaut;
(c) au moins un troisième système automatique équipé d'au moins un moyen de nettoyage de ladite face du produit;
et en ce que l'on utilise, pour au moins un desdits systèmes automatiques, un robot ou un automate programmable.

2. Procédé suivant la revendication 1, caractérisé en ce que l'on détecte lesdits défauts en déplaçant la flamme d'un chalumeau le long de la surface du produit et en analysant l'image de ladite flamme pour détecter les variations de ses caractéristiques dues à la présence des défauts, en ce que, de l'analyse des images, on relève les donnges traduisant le degré de gravité, ainsi que la localisation desdits défauts, et en ce que l'on introduit lesdites données dans ledit calculateur.

3. Procédé suivant la revendication 2, caractérisé en ce que l'analyse desdites images consiste à détecter les variations d'intensité lumineuse de la flamme par rapport à un niveau de référence correspondant à l'absence de défaut.

4. Procédé suivant les revendications 2 et 3, caractérisé en ce que l'on interrompt le déplacement dudit chalumeau aux points où l'analyse d'image fait apparaître, entre l'image instantanée et l'image de référence, un écart supérieur à une valeur prédéterminée, en ce que l'on reprend le déplacement dudit chalumeau, lorsque ledit écart est redevenu inférieur à ladite valeur prédéterminée, et en ce que l'on introduit les coordonnées desdits points dans un calculateur au moyen duquel on commande lesdits deuxième et troisième systèmes automatiques.

5. Procédé suivant la revendication 1, caractérisé en outre en ce que l'on pratique la détection desdits défauts, en effectuant une scrutation d'au moins une partie de la surface à conditionner et en extrapolant les résultats de cette scrutation à la partie restante non scrutée de ladite surface.

**Claims**

1. Process for conducting the operation of conditioning a moving hot metal product leaving a continuous casting plant, in which the surface and/or subsurface faults present in a face of the said product are detected by means of a detection apparatus arranged in front of the said face and in which the said faults are removed by means of a device for removing faults, characterized in that the said detection apparatus is moved in front of the said face of the product, using an automatic system, that the data expressing the location and/or the severity of the faults detected in the said face are collected, that these data are entered into a computer, that there are controlled, with the aid of the said computer and using the said data:

(a) at least one first automatic system responsible for the positioning of the said device for removing faults at the site of a detected fault and the operation of the said device at the said site;

(b) at least one second automatic system equipped with a means for monitoring the removal of the said fault;

(c) at least one third automatic system equipped with at least one means for cleaning the said face of the product;

and in that a robot or a programmable automaton is employed, in respect of at least one of the automatic systems.

2. Process according to claim 1, characterized in that the said faults are detected by moving a torch flame along the surface of the product and by analyzing the image of the said flame to detect changes in its characteristics which are due to the presence of the faults, in that from the analysis of the images data expressing the degree of severity and the location of the said faults are collected, and in that the said data are entered into the said computer.

3. Process according to claim 2, characterized in that the analysis of the said images consists in detecting the changes in the light intensity of the flame in relation to a reference level corresponding to absence of a fault.

4. Process according to claims 2 and 3, characterized in that the movement of the said torch is interrupted at the points where the analysis of the image reveals a difference between the instantaneous image and the reference image which exceeds a predetermined value, that the movement of the said torch is recommenced when the said difference has become smaller than the said predetermined value, and that the coordinates of the said point are entered into a computer by means of which the said second and third automatic systems are controlled.

5. Process according to Claim 1, additionally characterized in that the detection of the said faults is carried out by performing a scrutiny of at least a part of the surface to be conditioned and by extrapolating the results of this scrutiny to the remaining, unscrutinized part of the said surface.

## Patentansprüche

1. Verfahren zur Durchführung der Behandlung eines bewegten, heissen Metallprodukts, welches eine Stranggiessanlage verlässt, wobei die Oberflächenfehler und/oder die Fehler unter der Oberfläche, die in einer Aussenfläche des Produkts vorhanden sind, mittels eines vor dieser Aussenfläche angebrachten Suchgeräts erfasst werden, und wobei die Fehler durch eine Fehlerbeseitigungsvorrichtung beseitigt werden, dadurch gekennzeichnet, dass jenes Suchgerät vor der Aussenfläche des Produkts unter Verwendung eines automatischen Systems bewegt wird, dass die Daten über Ort und/oder Ausmass der in besagter Aussenfläche gefundenen Fehler gesammelt und in einen Computer eingegeben werden, und dass mit Hilfe dieses computers und unter Verwendung dieser Daten folgendes gesteuert wird:

(a) mindestens ein erstes automatisches System, welches für die Positionierung der besagten Fehlerbeseitigungsvorrichtung an der gefundenen Fehlerstelle sowie für die Funktion der Vorrichtung an dieser Stelle zuständig ist;

(b) mindestens ein zweites automatisches System, welches mit einem Mittel zur Überwachung der Fehlerbeseitigung ausgestattet ist;

(c) mindestens ein drittes automatisches System, welches mit mindestens einem Mittel zum Putzen der besagten Aussenfläche des Produkts ausgestattet ist;

und dadurch, dass in bezug auf mindestens eines der automatischen Systeme ein Roboter oder ein programmierbarer Automat eingesetzt wird.

2. Verfahren nach Anspruch 1, dadurch gekennzeichnet, dass die besagten Fehler durch Bewegen einer Brennerflamme entlang der Oberfläche des Produkts sowie durch die Bildanalyse dieser Flamme, um Veränderungen der Kenndaten nachzuweisen, welche auf die vorhandenen Fehler zurückzuführen sind, erfasst werden, und dadurch, dass aufgrund der Bildanalyse Daten über das Ausmass und den Ort solcher Fehler gesammelt werden, und dadurch, dass diese Daten in den Computer eingegeben werden.

3. Verfahren nach Anspruch 2, dadurch gekennzeichnet, dass die Analyse der besagten Bilder darin besteht, Veränderungen der Lichtstärke der Flamme im Verhältnis zu einer dem fehlerfreien Zustand entsprechenden Bezugsebene zu erfassen.

4. Verfahren nach Ansprüche 2 und 3, dadurch gekennzeichnet, dass die Bewegung des besagten Brenners an jenen Punkten unterbrochen wird, an denen die Bildanalyse zwischen dem Momentbild und dem Bezugsbild eine Abweichung entdeckt, welche einen vorbestimmten Wert überschreitet, und dass die Bewegung dieses Brenners wiederaufgenommen wird, wenn die Abweichung kleiner als der vorbestimmte Wert geworden ist, und dass die Koordinaten dieses Punktes in einen Computer zur Steuerung des zweiten und dritten automatischen Systems eingegeben werden.

5. Verfahren nach Anspruch 1, zusätzlich dadurch gekennzeichnet, dass zur Erfassung besagter Fehler eine genaue Prüfung von mindestens einem Teil der zu behandelnden Oberfläche ausgeführt wird, und die Ergebnisse dieser genauen Prüfung für den restlichen, nichtgeprüften Teil der Oberfläche hochgerechnet werden.